# EUROPEAN PATENT SPECIFICATION

(11) **EP 3 844 010 B1**
(45) Date of publication and mention of the grant of the patent: **07.08.2024**
(21) Application number: 19861541.1
(22) Date of filing: 22.06.2019
(51) Int. Cl.: B60K 17/22, B21K 1/06, B60B 35/12, F16C 3/02

(54) **MONOBLOCK TUBE FOR A DRIVESHAFT**
MONOBLOCK-ROHR FÜR EINE ANTRIEBSWELLE
TUBE MONOBLOC POUR ARBRE D'ENTRAÎNEMENT

(30) Priority: 21.09.2018 TR 201813606
(43) Date of publication of application: 07.07.2021
(73) Proprietor: Tirsan Kardan Sanayi Ve Ticaret Anonim Sirketi, 45030 Manisa (TR)
(72) Inventor: TASAN, Korkut, 45030 Manisa (TR)
(74) Representative: Yamankaradeniz, Kemal
(86) International application number: PCT/TR2019/050489
(87) International publication number: WO 2020/060514

(56) References cited:
- EP-A1- 2 930 044
- DE-A1- 19 929 159
- DE-A1- 4 022 692
- DE-A1- 4 022 692
- GB-A- 2 241 769
- GB-A- 2 241 769
- GB-A- 2 269 219
- GB-A- 2 511 180
- US-A- 4 392 839
- US-A- 4 392 839
- US-A1- 2016 290 410
- US-B1- 6 350 205

## Description

### TECHNICAL FIELD

The present invention relates to components of driveshafts, in particular to spline shaft and tube structures thereof.

### PRIOR ART

In vehicles, transmission means are used to transmit rotational power from the engine or transmission assemblies to rotate one or more wheels. Driveshafts, as a commonly used drivetrain, include a central bearing and a yoke in addition to the universal joint and ensure smooth transfer of driving force between the front and rear parts of the vehicle, despite changes in relative position. Due to the high torque transmitted, the driveshafts are designed to have high torsional stiffness and sufficient bending stiffness.

On the driveshaft, the rear shaft is sliding to compensate for changes in distance in motion.

The elements providing the sliding structure consist of a tube and a coaxial shaft connected to the tube by welding operation. Such a driveshaft design is shown for example in GB 2 511 180. There are axially extending channels in the outer periphery of the shaft. In the welding part of this double structure obtained by welding seam, the mechanical strength properties of the part remain weak compared to other parts.

### BRIEF DESCRIPTION

The object of the invention is to increase the structural integrity of the spline assembly in driveshafts.

In order to reach above object, the invention relates to a two-piece driveshaft according to independent claim 1 comprising a monoblock tube assemby comprising an elongated first tube portion having a first diameter. The tube assembly is having a monoblock tube comprising a coaxially elongated second tube portion having a second diameter narrower than the first diameter forming a shaft by shrinking the first tube portion in an elbow section provided therebetween. The monoblock structure allows a lighter construction with a longer life against torsional fatigue comparing with other shafts with same dimensions. The monoblock structure consisting of the first and second tube portions can be obtained by forming various cross-sections on the monoblock piece by plastic forming from a single tube element.

In a preferred embodiment, a thin wall is formed by expanding a cylindrical thick wall of the the second tube portion into the first tube portion. The first and the larger diameter thin section and the second and lower diameter thicker section were obtained, thus making it possible to provide a high strength construction without any weakness in torque transfer.

According to the invention, the outer periphery of the second tube portion comprises a plurality of radially spaced channels which are axially formed from one end to the front edge. The channels provide a sliding structure. Additionally, the channels on the second tube section can be obtained by plastic forming methods. Preferably, the shape form of each channel is identical. This ensures an even distribution of internal stresses.

In a preferred embodiment of the invention, the length of the first tube portion is substantially greater than the length of the second tube portion. Thus, a monoblock structure is provided which can be easily adapted to the sliding system in the driveshaft, where the second tube portion forms the shaft.

In a preferred embodiment of the invention, the elbow section between the first tube portion and the second tube portion has an S-like form. This makes it possible to form the first tube portion by expanding it without any cracks or structural damage by forming plastic from a single diameter tube, for example a tube corresponding to the second diameter of the second tube portion.

### DESCRIPTION OF THE FIGURES

Figure 1 is a front view of a two-piece driveshaft according to the invention comprising a coupling device.
Figure 2 is a cross-sectional illustration of an exemplary monoblock tube.

### DETAILED DESCRIPTION

In this detailed description, the development according to the invention is described with no limitation and only with reference to the examples to better illustrate the subject matter. The invention is defined by the appended claims.

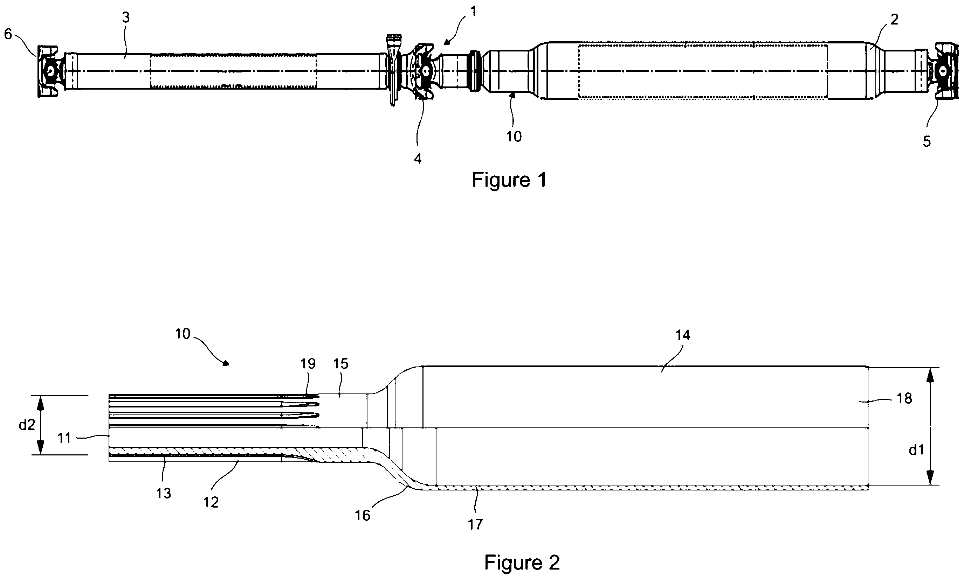

Figure 1 is a frontal view of a two-piece driveshaft (1) according to the invention comprising a monoblock tube. A rear joint (5) is mounted at the rear of the rear shaft (2). In the front part of the rear shaft (2), there is a monoblock tube (10). The monoblock tube (10) passes axially to the coaxial sliding yoke (4). The yoke (4) is connected to the front shaft (3) by the cross-link, which transmits torque. The front shaft (3) is rigid and has a front joint (6) mounted at a front end.

In Figure 2, the monoblock tube (10) is shown in cross section. A first tube portion (14) is a first diameter (d1) having a tube diameter that is standard for the driveshaft (1). The first tube portion (14) has a planar terminating rear edge (18). The first tube portion (14) is of a hollow cylindrical structure with a thin wall, i.e. a thin wall (17). The front portion of the first tube portion (14) reaches a second diameter (d2) by narrowing the diameter with an S-like elbow section (16). The coaxial hollow second tubular portion (15) extends integrally from the portion narrowed by the elbow section portion (16). The second tube portion (15) is of standard shaft diameter for the driveshaft (1) and comprises a thick wall (13) which is thicker than the thin wall (17). On the second tube portion (15), axial channels (12) extend from the front edge (11) to the rear. The channels (129 are of uniform form and encircle the second tube portion (15) at equal spacing from one another. The end of the channels (12), which is close to the first tube portion (14), has a bottom end (19) whose depth decreases radially outwardly.

### REFERENCE NUMBERS

| | | | |
|---|---|---|---|
| 1 | Driveshaft | 10 | Monoblock Tube |
| 2 | Rear Shaft | 11 | Front Edge |
| 3 | Front Shaft | 12 | Channel |
| 4 | Yoke | 13 | Thick Wall |
| 5 | Rear Joint | 14 | First Tube Portion |
| 6 | Front Joint | 15 | Second Tube Portion |
| d1 | First Diameter | 16 | Elbow section |
| d2 | Second Diameter | 17 | Thin wall |
| | | 18 | Rear Edge |
| | | 19 | Bottom end |

## Claims

1. A two-piece driveshaft comprising a tube assembly with a rear joint (5) is mounted at the rear of a rear shaft (2); a monoblock tube (10) in the front part of the rear shaft (2) wherein the monoblock tube (10) passes axially to a coaxial sliding yoke (4) connected to a rigid front shaft (3) having a front joint (6) mounted at a front end; the monoblock tube (10) having an elongated first tube portion (14) having a first diameter (d1) wherein the monoblock tube (10) comprises a coaxially elongated second tube portion (15) having a second diameter (d2) narrower than the first diameter (d1) forming a shaft by shrinking the first tube portion (14) in an elbow section (16) provided therebetween and an outer periphery of the second tube portion (15) comprises a plurality of radially spaced channels (12) which are axially formed from one end to the front edge (11).

2. A two-piece driveshaft according to claim 1, wherein a thin wall (17) is formed by expanding a cylindrical thick wall (13) of the the second tube portion (15) into the first tube portion (14).

3. A two-piece driveshaft according to any one of the preceding claims, wherein each one of the channels (12) are formed identical to each other.

4. A two-piece driveshaft according to any one of the preceding claims, wherein the length of the first tube portion (14) is substantially greater than the length of the second tube portion (15).

5. A two-piece driveshaft according to any one of the preceding claims, wherein the elbow section (16) between the first tube portion (14) and the second tube portion (15) has an S-like form.

## Patentansprüche

1. Zweiteilige Antriebswelle, umfassend eine Rohrbaugruppe mit einem hinteren Gelenk (5), an der Rückseite einer hinteren Welle (2) montiert ist; ein Monoblock-Rohr (10) im vorderen Teil der hinteren Welle (2), wobei das Monoblock-Rohr (10) axial zu einem koaxialen Gleitjoch (4) verläuft, das mit einer starren vorderen Welle (3) verbunden ist, die ein vorderes Gelenk (6) aufweist, das an einem vorderen Ende montiert ist; wobei das Monoblock-Rohr (10) einen länglichen ersten Rohrabschnitt (14) aufweist, der einen ersten Durchmesser (d1) aufweist, wobei das Monoblock-Rohr (10) einen koaxial länglichen zweiten Rohrabschnitt (15) umfasst, der einen zweiten Durchmesser (d2) aufweist, der schmaler als der erste Durchmesser (d1) ist, und der durch Schrumpfen des ersten Rohrabschnitts (14) in einem dazwischen bereitgestellten Bogenbereich (16) eine Welle bildet, und wobei ein Außenumfang des zweiten Rohrabschnitts (15) eine Vielzahl von radial beabstandeten Kanälen (12) aufweist, die axial von einem Ende zu der Vorderkante (11) ausgebildet sind.

2. Zweiteilige Antriebswelle nach Anspruch 1, wobei eine dünne Wand (17) durch Ausdehnen einer zylindrischen dicken Wand (13) des zweiten Rohrabschnitts (15) zu dem ersten Rohrabschnitt (14) ausgebildet ist.

3. Zweiteilige Antriebswelle nach einem der vorhergehenden Ansprüche, wobei jeder der Kanäle (12) identisch mit jedem anderen ausgebildet ist.

4. Zweiteilige Antriebswelle nach einem der vorhergehenden Ansprüche, wobei die Länge des ersten Rohrabschnitts (14) im Wesentlichen größer als die Länge des zweiten Rohrabschnitts (15) ist.

5. Zweiteilige Antriebswelle nach einem der vorhergehenden Ansprüche, wobei der Bogenbereich (16) zwischen dem ersten Rohrabschnitt (14) und dem zweiten Rohrabschnitt (15) eine S-ähnliche Form aufweist.

## Revendications

1. Arbre d'entraînement en deux parties comprenant un ensemble tube avec un joint arrière (5) monté à l'arrière d'un arbre arrière (2) ; un tube monobloc (10) dans la partie avant de l'arbre arrière (2) dans lequel le tube monobloc (10) passe axialement jusqu'à une culasse coulissante coaxiale (4) reliée à un arbre avant rigide (3) comportant un joint avant (6) monté à une extrémité avant ; le tube monobloc (10) ayant une première portion de tube allongée (14) ayant un premier diamètre (d1), dans lequel le tube monobloc (10) comprend une seconde portion de tube allongée coaxialement (15) ayant un seconde diamètre (d2) plus étroit que le premier diamètre (d1), formant un arbre en rétrécissant la première portion de tube (14) dans une section coudée (16) prévue entre celles-ci et une périphérie externe de la seconde portion de tube (15) comprend une pluralité de canaux radialement espacés (12) qui sont formés axialement depuis une extrémité jusqu'au bord avant (11).

2. Arbre d'entraînement en deux parties selon la revendication 1, dans lequel une paroi mince (17) est formée en dilatant une paroi épaisse cylindrique (13) de la seconde portion de tube (15) dans la première portion de tube (14).

3. Arbre d'entraînement en deux parties selon l'une quelconque des revendications précédentes, dans lequel chacun des canaux (12) sont formés de manière identique les uns des autres.

4. Arbre d'entraînement en deux parties selon l'une quelconque des revendications précédentes, dans lequel la longueur de la première portion de tube (14) est sensiblement supérieure à la longueur de la seconde portion de tube (15).

5. Arbre d'entraînement en deux parties selon l'une quelconque des revendications précédentes, dans lequel la section coudée (16) entre la première portion de tube (14) et la seconde portion de tube (15) a une forme en forme de S.
